# EUROPÄISCHE PATENTSCHRIFT

(11) **EP 2 759 649 B1**
(45) Veröffentlichungstag und Bekanntmachung des Hinweises auf die Patenterteilung: **27.07.2016**
(21) Anmeldenummer: 14151230.1
(22) Anmeldetag: 15.01.2014
(51) Int. Cl.: E06B 1/62, E04B 1/68, F16J 15/02, F16J 15/06

(54) **Schaumstoff-Dichtband**
Foam sealing strip
Bande étanche alvéolaire

(30) Priorität: 23.01.2013 DE 202013100308 U
(43) Veröffentlichungstag der Anmeldung: 30.07.2014
(73) Patentinhaber: Tremco illbruck Produktion GmbH, 92439 Bodenwöhr (DE)
(72) Erfinder: Nauck, Helmar, 12557 Berlin (DE); Wörmann, Frank, 59192 Bergkamen (DE); Komma, Markus, 93133 Burglengenfeld (DE)
(74) Vertreter: Bittner, Bernhard

(56) Entgegenhaltungen:
- EP-A1- 2 309 090
- EP-A2- 2 423 396
- DE-A1-102009 013 107

## Beschreibung

Die Erfindung betrifft Schaumstoff-Dichtbänder gemäß einem der Oberbegriffe der Ansprüche 1 und 3, sowie ein Bauwerk mit Dichtband.

Ein gattungsgemäßes Schaumstoff-Dichtband mit einem vorzugsweise zur verzögerten Rückstellung ausgerüsteten Schaumstoffkorpus und einem sich in Breitenrichtung anschließenden und durch einen Einschnitt separierten Umklappbereich ist aus der EP 2 423 396 A2 bekannt. An der Unterseite des Schaumstoffkorpus ist hierbei eine sich über die gesamte Dichtbandbreite erstreckende Selbstklebeschicht vorgesehen, mittels derer das Dichtband an einem der beiden die abzudichtende Fuge bildenden Bauteile, beispielsweise einem Rolladenkasten, festlegbar ist. Der an den Schaumstoffkorpus angrenzende bzw. die Korpusbreite begrenzende Einschnitt, welcher einen Umklappbereich ausbildet, ist an der mit der Selbstklebeschicht versehenen Breitseite des Dichtbandes angeordnet. Ferner ist ein zweiter Einschnitt vorgesehen, welcher einen zweiten Umklappbereich ausbildet. Dieser zweite Umklappbereich ist mittels des Abschnittes der Selbstklebeschicht, welche sich an der Dichtbandunterseite über die gesamte Dichtbandbreitseite erstreckt, an dem ersten Umklappbereich festlegbar.

Durch die Umklappbereiche ergibt sich in Einbaulage des Dichtbandes, bei welchem dieses in der Fuge komprimiert angeordneten ist, eine Zone erhöhte Materialdichte und damit ein erhöhter Wasserdampfdiffusionswiderstand, sodass durch den Dichtstreifen der Wasserdampfdiffusionswiderstand rauminnenseitig höher ausgebildet ist als raumaußenseitig. Dies ist bauphysikalisch vorteilhaft, um einen Austritt von Wasserdampf aus der Fuge an der Raumaußenseite sicherzustellen.

In abdichtender Einbausituation des Dichtbandes in der Fuge liegen somit Bereiche des Dichtbandkorpus mit unterschiedlich starker Rückstellung vor, einerseits mit geringer Rückstellung und hoher Materialdichte auf Höhe des Umklappbereichs (bereich der ein- oder mehrfachen Umklappung) und mit dem gegenüber starker Rückstellung und geringer Materialdichte an dem nicht vom Umklappbereich überdeckten Bereich des Längsabschnittes, sowie mit einem dazwischen liegenden Übergangsbereich.

Dies bedingt, dass sich in dem Übergangsbereich des Dichtbandes, also zwischen dem Bereich erhöhter Materialdichte und dem Bereich der einfachen Höhe des Dichtbandes mit demgegenüber geringerer Materialdichte, die Materialdichte sich über eine gewisse Breitenerstreckung des Dichtbandes kontinuierlich ändert und dies kann in der Praxis auch dazu führen, dass das Dichtband in diesem Übergangsbereich nicht gleichmäßig an der Fugenwandung anliegt und sich an der Fugenwandung, an welcher der Umklappbereich anliegt, ein gewisser Freiraum oder Zwickel seitlich zwischen der einfachen Materiallage des Dichtbandes und dem zwei- oder mehrfach umgeklappten Bereich ausbildet. Aufgrund dieser Zonen unterschiedlicher Materialkompression des Dichtbandes ergibt sich die Gefahr, dass das Dichtband bereichsweise seine Lage in der Fuge verändert, nämlich der Übergangsbereich eine gewisse Tendenz hat, den Umklappbereich des Dichtbandes aus der Fuge heraus zu drücken, so dass in verschiedenen Situationen ein Teilbereich des Dichtbandes sogar aus der Fuge vorstehen kann. Dies kann insbesondere dann auftreten, wenn die Dichtbandhöhe (Höhe des Dichtbandes im Ausgangszustand, d.h. vor Umklappen, bei vollständig frei entspanntem Dichtband) nicht optimal an die Fugenbreite angepasst ist, so dass die Fugenbreite an den Toleranzgrenzen liegt, für welche die Verwendung des jeweiligen Dichtbandes vorgesehen ist. Ferner kann dieses Problem auftreten, wenn die Fugenflanken nicht parallel zueinander angeordnet sind, insbesondere die Fuge sich zur Fugenöffnung hin erweitert. Beide Probleme können einander verstärken.

Die DE 10 2009 013 107 A1 beschreibt einen Schaumstoff-Dichtstreifen mit einer ebenen Basisfläche, welche durch den einen einteiligen Querschnitt aufweisenden Schaumstoff gebildet ist, wobei der Dichtstreifen in zum Einbau vorgesehener Anordnung einen Höhenbereich und einen Niederbereich aufweist. Der Dichtstreifen kann im Verpackungszustand einen umgeklappten Teilbereich aufweisen, um im Verpackungszustand eine gleichmäßige Komprimierung zu erreichen.

Der Erfindung liegt die Aufgabe zugrunde, ein gattungsgemäßes Dichtband zu schaffen, welches einen verbesserten Sitz innerhalb der Fuge aufweist, insbesondere auch bei Anordnung des Dichtbandes in einer Fuge, deren Breite an den für die Verwendung des jeweiligen Dichtbandes vorgesehenen Toleranzgrenzen liegt.

Diese Aufgabe wird erfindungsgemäß durch ein Dichtband nach Anspruch 1 gelöst. Hierbei ist der an den Dichtbandlängsabschnitt angrenzende Einschnitt auf der dem Befestigungsmittel gegenüberliegenden Seite des Korpus angebracht, wobei das an der Breitseite des Längsabschnittes angeordnete Befestigungsmittel sich zumindest derart weit bis zum Einschnitt erstreckt, dass dieses den auf den Korpus umgeklappten Umklappbereich an dem Längsabschnitt festlegt. Der an den Längsabschnitt angrenzende Einschnitt mündet somit an der zweiten Dichtbandbreitseite, wobei das Befestigungsmittel, vorzugsweise eine (Selbst)Klebeschicht, an dem Längsabschnitt an der ersten Dichtbandbreite, also der Einschnittmündung gegenüberliegend, angeordnet ist. An dem Umklappbereich ist auf der der ersten Breitseite gegenüber liegenden zweiten Breitseite ein weiteres Befestigungsmittel zur Festlegung des Umklappbereichs an der Anlagefläche des in Einbaulage zugewandten Bauteils vorgesehen. Durch diese besondere Anordnung der Befestigungsmittel in Bezug auf den Einschnitt zwischen Längsabschnitt und Umklappbereich des

Dichtbandkorpus ist die freie Oberseite des Umklappbereichs, welche in Einbaulage des Dichtbandes abdichtend an der Fugenwandung anliegt, gegenüber der Fugenwandung lagefixiert, nämlich durch Festlegung des Befestigungsmittels an der Fugenwandung. Hierdurch ist ein besonders sicherer Sitz des Dichtbandes im Bereich der erhöhten bzw. maximalen Materialdichte in der Fuge gegeben. Dies gilt auch - gegebenenfalls verstärkend - bei Anordnung des Dichtbandes in einer Fuge mit nicht parallelen Fugenflanken. Es wird also der Bereich der Anlagefläche des Dichtbandes in Einbausituation an der Fugenwandung besonders lagegesichert, welcher bei vollständig frei außerhalb einer Fuge entspanntem Dichtband somit am weitesten gegenüber dem Längsabschnitt des Dichtbandkorpus nach oben (d. h. in senkrechter Richtung zu der Quererstreckung des Dichtbandes) vorsteht. Etwaige laterale Kräfte auf diesem Umklappbereich, welche gegebenenfalls von dem Übergangsbereich des Dichtbandes in Einbaulage mit sich ändernder Materialdichte ausgeübt werden können, werden somit von dem Befestigungsmittel an der freien Oberseite des Umklappbereichs aufgefangen. Ferner hat es sich herausgestellt, dass in besonderen Einbausituationen des Dichtbandes, beispielsweise bei Annäherung an die zu erfüllenden Einbautoleranzen in Bezug auf Fugenbreite und Dichtbandhöhe (bezogen auf dessen Ausgangszustand), die freie Oberseite des Umklappbereichs am ehesten anfällig für unerwünschte Lageveränderungen ist, was in Kenntnis der Erfindung auf die Überstandshöhe dieses Umklappbereichs gegenüber dem Längsabschnitt des Dichtbandes zurückgeführt wird. Der Längsabschnitt des Dichtbandes ist somit in Einbausituation des Dichtbandes in der Fuge in der Regel einlagig angeordnet, sofern nichts anderes ausgeführt wird. Zudem hat es sich herausgestellt, dass die Dichtbandbreitseite, welche in Einbausituation des Dichtbandes dem Umklappbereich gegenüberliegt, eine ausreichend breite und durchgehende (vorzugsweise einschnittfreie) und damit sichere Anlagefläche des Dichtbandes an der Fugenwandung ergibt, so dass in diesem Bereich die Anordnung eines Befestigungsmittels zur Festlegung des Dichtbandes an der Anlagefläche zumeist nicht erforderlich ist, auch wenn diese gegebenenfalls zusätzlich vorgesehen sein kann.

Vorteilhafte Ausführungsformen ergeben sich aus den Unteransprüchen.

Das erste und/oder weitere Befestigungsmittel, vorzugsweise sämtliche Befestigungsmittel des Dichtbandes sind vorzugsweise jeweils als Klebeschicht ausgebildet. Dies ermöglicht eine einfache Befestigung von Dichtbandabschnitten aneinander und an anderen Bauteilen. Die Klebeschicht ist vorzugsweise jeweils eine Selbstklebeschicht (z.B. doppelseitiges Klebeband), ggf. auch eine Klebeschicht auf Basis eines Epoxyharzes, eine vor Ort auf das Dichtband aufgebrachte Klebeschicht oder dgl. Gegebenenfalls können die Befestigungsmittel auch auf andere geeignete Weise ausgebildet sein. Ist nichts weiter ausgeführt, so ist das Befestigungsmittel insbesondere jeweils auch als (Selbst)Klebeschicht zu verstehen.

Der Längsabschnitt des Korpus des Dichtbandes weist somit eine größere Breite auf, als der Umklappbereich bei Anordnung des Dichtbandes in seinem Ausgangszustand, d.h. bei vollständig auseinander geklapptem Dichtband, bei welchem somit der Umklappbereich in Bezug auf die Korpusbreite neben (und nicht über) dem Längsabschnitt angeordnet ist. Die Breite des Längsabschnittes kann größer/gleich der 1,5- bis 1,75-fachen oder größer/gleich der 2-fachen Breite des Umklappbereichs entsprechen, vorzugsweise größer/gleich der 2,5- bis 3-fachen Breite desselben. Dies gilt vorzugsweise auch dann, wenn nicht nur ein sondern zwei oder mehr Umklappbereiche vorgesehen sind, dann in Bezug auf die Breite eines Umklappbereichs, beispielsweise des breitesten Umklappbereichs. Vorzugsweise ist nur ein Umklappbereich vorgesehen, welcher also seitlich durch zumindest einen Einschnitt von dem benachbarten Längsabschnitt des Dichtbandes über einen Teil der Dichtbandhöhe separiert ist, gegebenenfalls können zwei oder mehrere nebeneinander angeordnete Umklappbereiche vorgesehen sein, welche jeweils durch einen sich über einen Teil der Dichtbandhöhe erstreckenden Einschnitt von dem jeweils benachbarten Umklappbereich getrennt sind.

Vorzugsweise ist der mindestens eine Umklappbereich durch einen sich über einen Teil der Dichtbandhöhe erstreckenden Einschnitt von dem benachbarten Längsabschnitt separiert, wobei Längsabschnitt und benachbarter Umklappbereich einstückig miteinander durch das verbleibende Dichtband-Schaumstoffmaterial verbunden sind. Sind mehrere Umklappbereiche vorgesehen, so sind diese vorzugsweise jeweils durch einen sich nur über einen Teil der Dichtbandhöhe erstreckenden Einschnitt voneinander getrennt, so dass das Dichtband insgesamt (in Bezug auf den Längsabschnitt und die mehreren Umklappbereiche) einstückig ausgebildet ist. Das Dichtband ist so einfach herstellbar und sicher als bauliche Einheit handhabbar.

Allgemein im Rahmen der Erfindung kann der jeweilige Einschnitt sich ggf. aber auch über die gesamte Dichtbandhöhe erstrecken, so dass der Längsabschnitt und der benachbarte Umklappbereich oder ein weiterer Umklappbereich von dem übrigen Dichtbandkorpus als separate Streifen, also als verschiedene Bauteile, ausgebildet sind und bereitgestellt werde. Die separaten Streifen sind dann vorzugsweise an einer Breitseite des Dichtbandes miteinander verbunden, beispielsweise durch ein Verbindungselement wie Trägerlage, auf welcher beide Streifen angeordnet sind. Die einzelnen Schaumstoffstreifen, welche dann den Längsabschnitt und den einen oder mehrere Umklappbereiche ausbilden, können benachbart oder insbesondere aneinander seitlich angrenzend mit dem Verbindungsmittel zueinander lagefixiert sein. Diese Trägerlage kann beispielsweise Teil einer (Selbst)Klebeschicht sein, oder eine andere Trägerschicht, auf welcher die jeweiligen Streifen aufgeklebt oder durch andere Mittel befestigt sind. Die Trägerlage kann beispielsweise ein Flächengebilde wie eine Folie, Textillage, Gewebe- oder Vlieslage oder dergleichen darstellen. Die Trägerlage kann dann auf der freien, d. h. dem Dichtbandkorpus gegenüberliegenden, Oberseite mit einer (Selbst)Klebeschicht versehen sein. Die Trägerlage kann allgemein Teil einer (Selbst)Klebeschicht sein, z.B. eine Verstärkungslage derselben.

Der Dichtbandkorpus weist vorzugsweise einen rechteckigen Querschnitt auf. Gegebenenfalls kann der Korpus auch eine andere Querschnittsgestalt aufweisen, beispielsweise im Bereich einer Schmalseite eine geringere Höhe aufweisen als an der gegenüberliegenden Schmalseite, beispielsweise hierzu eine keilförmige Gestalt aufweisen. Der Längsabschnitt kann hierbei an dem Korpusbereich mit geringerer oder größerer Höhe angeordnet sein. Gegebenenfalls kann der Korpus auch eine andere Querschnittsgestalt oder Profilierung aufweisen. Gegebenenfalls können der Längsabschnitt und der mindestens eine oder die mehreren Umklappbereiche jeweils für sich einen rechteckigen oder andersartigen, beispielsweise keilförmigen oder profilierten Querschnitt aufweisen, wobei die unterschiedlichen Abschnitte eine unterschiedliche Höhe aufweisen können. Dies kann jeweils gelten, wenn der Dichtbandkorpus einstückig ausgeführt ist oder aber aus mehreren separaten Streifen zusammengesetzt ist.

Der Einschnitt erstreckt sich jeweils vorzugsweise über größer/gleich 50-75% der Korpushöhe, vorzugsweise über größer/gleich 80-90% der Korpushöhe. Der die beiden Abschnitte einstückig verbindende, auf Höhe des Einschnittes verbleibende Schaumstoffsteg des Korpus kann größer/gleich 2-4% oder größer/gleich 6-10% der Korpushöhe betragen. Hierdurch ist einerseits ein einfaches Umklappen ermöglicht, andererseits eine ausreichende Stabilität bzw. Festigkeit des Verbindungsbereiches der verschiedenen Korpusabschnitte.

Nach einer ersten Ausführungsform kann sich das Befestigungsmittel, insbesondere in Ausführung als (Selbst)Klebeschicht der ersten Breitseite bis nahe zum Einschnitt zwischen Längsabschnitt und Umklappbereich erstrecken, vorzugsweise nur bis zum Einschnitt hin, also nicht über diesen hinaus. Das Befestigungsmittel bzw. die (Selbst)Klebeschicht kann sich hierbei unmittelbar bis zum Einschnitt hin erstrecken, gegebenenfalls kann dieses/diese auch in Breitenrichtung des Dichtbandes von dem Einschnitt beabstandet sein, jedoch insbesondere nur um einen Abstand welcher geringer als die Breite des Umklappbereichs ist, so dass der auf den Längsabschnitt hin umgeklappte Umklappbereich mittels des Befestigungsmittels an dem Längsabschnitt angehaftet werden kann. Hierdurch ist das Dichtband einfach herstellbar, insbesondere bei der gegebenen Beabstandung produktionstechnisch sicherherstellbar.

Nach einer anderen, hier besonders bevorzugten, Ausführungsform erstreckt sich das Befestigungsmittel (insbesondere als' (Selbst)Klebeschicht) der ersten Breitseite über zumindest annähernd die gesamte Breitseite des Dichtbandes, gegebenenfalls bis auf einen in Bezug auf die Dichtbandbreite geringfügigen Randbereich oder aber besonders bevorzugt über die gesamte Dichtbandbreite. Dies gilt insbesondere bei nur einem Umklappbereich. Dies ist zum einen fertigungstechnisch besonders vorteilhaft, da das Befestigungsmittel zumeist einfach an dem Dichtband festlegbar ist (insbesondere in Ausführung als (Selbst)Klebeschicht), zum anderen in Bezug auf das jeweilige Dichtband das Befestigungsmittel nicht durchtrennt werden muss, um beispielsweise das Dichtband mit einem Einschnitt zu versehen, insbesondere bei nur einem Umklappbereich. Hierdurch kann das Dichtband mit höherer Produktionsgeschwindigkeit und geringerem Ausschuss produziert werden, da der Einschnitt in den Schaumstoffkorpus zur Separierung des Umklappbereichs von dem Längsabschnitt dann nicht das Befestigungsmittel durchsetzen muss. Da beispielsweise die (Selbst)Klebeschicht zumeist eine Textillage oder sonstige Trägerlage aufweist, besteht ansonsten die Gefahr, dass der die (Selbst)Klebelage durchtrennendem Einschnitt bereichsweise in unterschiedlichen Tiefen erzeugt wird, so dass ein einstückiger Verbindungsbereich zwischen Längsabschnitt und Umklappbereich unerwünschte Schwächungszonen aufweisen könnte, was ggf. auch für andere Befestigungsmittel gelten kann. Klebstoffanhaftungen an dem Einschneidewerkzeug können zudem leicht zu Produktionsausfällen führen. Ein wesentlicher Vorteil ist ferner, dass bei der Anordnung der (Selbst)Klebeschicht über zumindest annähernd die gesamte Breitseite des Dichtbandes bei Umklappen des Umklappbereichs auf den Längsabschnitt der Umklappbereich durch eine doppelte (Selbst)Klebeschichtlage an dem Längsabschnitt angehaftet ist. Hierdurch ergibt sich eine verbesserte Festlegung des Umklappbereichs an dem Längsabschnitt, da die beiden mit Selbstklebemittel versehenen freien Oberseiten der Selbstklebeschicht bei Konfiguration des Dichtbandes für den Einbau miteinander zur Anhaftung gebracht werden. Hierdurch ist eine besonders gute und sichere Anhaftung des Umklappbereichs an dem Längsabschnitt ermöglicht. Dies ist von besonderer Bedeutung in Hinblick auf eine sichere und exakte Anordnung des Dichtbandes in der Fuge, da diese Anhaftung an dem Basisbereich des sich über den Längsabschnitt über die Korpushöhe vorstehenden Dichtbandbereichs gegeben ist, so dass das Dichtband in Einbausituation in der Fuge besonders formstabil ist. Die Verbindung der (Selbst)Klebelage mit dem Schaumstoffmaterial des Dichtbandes kann demgegenüber werkseitig erfolgen und damit mit höherer Sicherheit, beispielsweise höherem Anpressdruck durchgeführt werde, als bei einer Anhaftung vor Ort, also baustellenseits. Gegebenenfalls kann das Befestigungsmittel bzw. die (Selbst)Klebeschicht an der ersten Breitseite angebracht werden, wenn der Korpus bereits mit dem mindestens einen Einschnitt zwischen Längsabschnitt und benachbartem Umklappbereich versehen ist, wobei die erste Breitseite dem Einschnitt gegenüberliegt.

Vorzugsweise erstreckt sich das weitere Befestigungsmittel bzw. die weitere (Selbst)Klebeschicht an der zweiten Korpusbreitseite nur über einen Teil der Breite des Umklappbereichs. Hierdurch kann sichergestellt werden, dass die (Selbst)Klebeschicht von dem Einschnitt zwischen Längsabschnitt und Umklappbereich einen gewissen Abstand aufweist, so dass der Einschnitt sicher benachbart der Klebeschicht und somit nicht diese durchtrennend in den Korpus eingebracht werden kann bzw. die Klebeschicht nicht den Einschnitt überbrückt und damit ein Umklappen des Umklappbereichs behindert. Der seitliche Abstand der Klebeschicht von den Längsrändern des Umklappbereichs kann größer/gleich 1 - 2 mm betragen. Vorzugsweise erstreckt sich die Klebeschicht an der zweiten Korpusbreitseite an dem Umklappbereich über größer/gleich 25-35% oder bevorzugt größer/gleich 50-65% dessen Breite, gegebenenfalls auch über größer/gleich 75-85% dessen Breite. Das oben Gesagte kann entsprechend auch für andere Befestigungsmittel gelten.

Besonders bevorzugt ist an der zweiten Korpusbreitseite das Befestigungsmittel, bevorzugt in Form einer (Selbst)Klebeschicht, nur an dem Umklappbereich angeordnet, so dass das zum Einbau in der Fuge konfigurierte Dichtband, d.h. nach Umklappen und Fixierung des Umklappbereichs auf den Längsabschnitt, die zweite Breitseite nicht mit einem Befestigungsmittel bzw. (Selbst)Klebebereich versehen ist. Dies erleichtert die Montage des Dichtbandes in der Fuge. Gegebenenfalls kann jedoch an der zweiten Korpusbreitseite auch Befestigungsmittel oder eine (Selbst)Klebeschicht vorgesehen sein, welche sich vorzugsweise nur über einen Teil der zweiten Breitseite erstreckt, nur unter Umständen jedoch auch über die gesamte Breitseite.

Nach Anspruch 3 kann der Dichtbandkorpus eines erfindungsgemäßen Dichtbands mit zwei Einschnitten versehen sein, welcher an gegenüberliegenden Korpusbreitseiten angeordnet sind bzw. in diesen ausmünden, wodurch zwei gegensinnig zueinander umklappbare Umklappbereiche ausgebildet werden. Durch die hierdurch ermöglichte zweifache Umklappung der Korpusbereiche kann der Dichtbandbereich mit in Einbaulage erhöhter Materialdichte dreilagig ausgebildet sein, so dass dies eine Zone mit stark erhöhtem WDD-Widerstand des Dichtbandes in Einbausituation in der Fuge ergibt. Der Dichtbandlängsabschnitt ist hierbei in der Einbausituation vorzugsweise nach wie vor einlagig ausgebildet. An der zweiten Korpusbreitseite kann das Befestigungsmittel bzw. die (Selbst)Klebeschicht an dem ersten, dem Längsabschnitt benachbarten, Umklappbereich angeordnet sein, oder aber an dem zweiten Umklappbereich, oder an beiden. Auch hierdurch wird bei Konfiguration des Dichtbandes zum Einbau in der Fuge an der ersten Breitseite bspw. eine (Selbst)Klebeschicht bereitgestellt, also an der Breitseite, auf welche die beiden Umklappbereiche unter Ausbildung einer Erhöhung angeordnet sind, wobei an der freien Oberseite des zweiten Umklappbereichs, welche in Einbaulage des Dichtbandes abdichtend an der Fugenwandung anliegt, ebenfalls eine (Selbst)Klebeschicht vorgesehen ist. Hierdurch wird somit - wie auch bei der Ausführungsform mit nur einem Umklappbereich - die freie Oberseite des Dichtbandbereiches mit erhöhter Materialdichte in Einbaulage, welche bei vollständig frei außerhalb der Fuge entspanntem Dichtband über den Längsabschnitt in der Höhe vorsteht, durch das Befestigungsmittel bzw. die Klebeschicht an der Fugenwandung angehaftet und zusätzlich lagefixiert. Weiterhin ist an eben dieser Breitseite der Längsabschnitt ebenfalls mit einem befestigungsmittel bzw. einer (Selbst)Klebeschicht versehen, welche an die Fugenwandung in Einbaulage des Dichtbandes anhaftet, so dass die Dichtbandbreitseite, welche mit dem Übergangsbereich sich verändernder Materialdichte versehen ist, an die Fugenwandung befestigbar bzw. anhaftbar ist. Nach einer Ausführungsform erstreckt sich das Befestigungsmittel oder die (Selbst)Klebeschicht an der ersten Breitseite nur über den Längsabschnitt und ggf. auch den ersten, benachbarten Umklappbereich, also nicht über den an dieser Breitseite mündenden Einschnitt hinaus, gegebenenfalls auch nur über den Längsabschnitt, also nicht über die Höhe des Einschnittes zwischen Längsabschnitt und Umklappbereich hinaus. Nach einer anderen Ausführungsform kann sich das Befestigungsmittel bzw. die (Selbst)Klebeschicht auch zumindest teilweise über den zweiten Umklappbereich bzw. die über die gesamte Dichtbandbreite erstrecken.

Die (Selbst)Klebeschicht bzw. allgemein ein Befestigungsmittel kann bei dieser Ausführungsform des Dichtbandes mit zwei Umklappbereichen sich an der zweiten Breitseite angeordnet in der Breite nur über den ersten, also dem Längsabschnitt benachbarten, Umklappbereich erstrecken, oder nur über einen Teil desselben. In zum Einbau konfiguriertem Zustand des Dichtbandes, also bei gegensinniger Umklappung beider Umklappbereiche, kann somit die zweite Dichtbandbreitseite frei von einer der Fugenwandung gegenüber liegenden (Selbst)Klebeschicht sein, was die Dichtbandmontage in der Fuge erleichtert.

Es versteht sich, dass die jeweiligen (Selbst)Klebeschichten mit einer abziehbaren Abdecklage wie beispielsweise antihaft-ausgerüstetem Papier oder Folie versehen sind. Die Abdecklage und damit auch die von dieser jeweils vollständig abgedeckte (Selbst)Klebeschicht ist jeweils so angeordnet, dass diese nicht von einem der Einschnitte des Dichtbandes durchsetzt wird, was die Herstellung des Dichtbandes in einem kontinuierlichen Herstellungsverfahren erleichtert, bei welchem der mit der wenigstens einen oder mehreren Klebeschichten versehene Korpus in Dichtbandlängsrichtung eingeschnitten wird, eine Durchschneidung der Abdecklagen nicht notwendig ist, um den Einschnitt in den Dichtbandkorpus einzubringen. Dies ermöglicht höhere Produktionsgeschwindigkeiten des Dichtbandes.

Die erfindungsgemäße Ausbildung des Dichtbandes ermöglicht es insbesondere, das Dichtband derart herzustellen, dass der Dichtbandkorpus mit sämtlichen (Selbst)Klebeschichten oder allgem. Befestigungsmitteln versehen wird, welche zur Ausbildung des jeweiligen Dichtbandes erforderlich sind, wobei dann der derart vorbereitete Dichtbandkorpus mit einem geeigneten Werkzeug wie Messern, insbesondere Gattermessern, eingeschnitten wird. Es kann hier auch die umgekehrte Reihenfolge bezüglich der Einbringung des/der Einschnitte(s) und der Anbringung des/der Befestigungsmittel vorgenommen werden. Durch die genannte Anordnung der Klebeschichten ist es zudem nicht erforderlich, auch die jeweiligen die Klebeschichten vollständig abdeckenden, vorzugsweise kongruent abdeckenden, Abdecklagen zu durchtrennen. Bei einem derartigen Verfahren kann ein Dichtbandvorformling bereitgestellt werden, dessen Breite ein Vielfaches der Dichtbandbreite entspricht, wobei der Vorformling dann in einzelne Dichtbänder bzw. Dichtbandrollen (bei aufgerolltem Vorformling) zerschnitten werden kann

Der Dichtbandkorpus weist vorzugsweise einen rechteckigen Querschnitt auf. Gegebenenfalls kann der Korpus auch eine andere Querschnittsgestalt aufweisen, beispielsweise im Bereich einer Schmalseite eine geringere Höhe aufweisen als an der gegenüberliegenden Schmalseite, beispielsweise hierzu eine keilförmige Gestalt aufweisen. Der Längsabschnitt kann hierbei an dem Korpusbereich mit geringerer oder größerer Höhe angeordnet sein. Gegebenenfalls kann der Korpus auch eine andere Querschnittsgestalt oder Profilierung aufweisen. Gegebenenfalls können der Längsabschnitt und der mindestens eine oder die mehreren Umklappbereiche jeweils für sich einen rechteckigen oder andersartigen, beispielsweise keilförmigen oder profilierten Querschnitt aufweisen, wobei die unterschiedlichen Abschnitte eine unterschiedliche Höhe aufweisen können. Dies kann jeweils gelten, wenn der Dichtbandkorpus einstückig ausgeführt ist oder aber aus mehreren separaten Streifen zusammengesetzt ist. Der Längsabschnitt erstreckt sich in der Regel im Rahmen der Erfindung über die gesamte Dichtbandlänge. Der oder die Umklappbereiche erstrecken sich in der Regel im Rahmen der Erfindung über die gesamte Dichtbandlänge.

Die Luftdurchlässigkeit des den Dichtbandkorpus bildenden Schaumstoffmaterials (vollständig entspannt) liegt vorzugsweise im Bereich von 5-1000 l/m²s oder 25-800 l/m² vorzugsweise im Bereich von oder 50-600 l/m²s oder 75-500 l/m²s oder 100-450 l/m²s, gegebenenfalls auch bis zu 2000 l/m²s. Die jeweils angegebene Luftdurchlässigkeit bezieht sich auf eine Bestimmung nach DIN EN ISO 9237; Prüffläche 100cm2 bei einem Messdruck (Unterdruck) von 0,5 mbar; Prüfgerät Frank 21443 bei einem 10 mm dicken Schaumstück.

Ferner bezieht sich die Erfindung auf ein Bauwerk mit zwischen zwei Bauteilen angeordneter Fuge, in welcher ein erfindungsgemäßes Dichtband abdichtend angeordnet ist. Der Bereich erhöhter Materialkompression des Dichtbandes ist hierbei vorzugsweise an der zum Rauminneren hin gerichteten Seite der Fuge angeordnet, gegebenenfalls - beispielsweise bei zwangsbelüfteten Gebäuden - auch an der Raumaußenseite. Insbesondere kann das Dichtband zur Abdichtung von Rahmenbauteilen wie Fenster- oder Türrahmen oder anderen Bauteilen wie Rollladenkästen gegenüber dem jeweils angrenzenden Gebäudebereich wie insbesondere Tragwand oder Gebäudedecke oder einem anderen Konstruktionsteil des Gebäudes eingesetzt werden.

Die Erfindung wird beispielhaft beschrieben und anhand der Figuren erläutert. Es zeigen:
- Figur 1:: ein erfindungsgemäßes Dichtband einer ersten Ausführungsform im Ausgangszustand,
- Figur 2:: ein Dichtband nach Figur 1 in zusammengeklapptem, d.h. zum Einbau in der Fuge konfiguriertem Zustand,
- Figur 3:: ein Dichtband gemäß Figur 2 in Einbausituation,
- Figur 4:: ein Dichtband einer zweiten Ausführungsform im Ausgangszustand,
- Figur 5:: ein Dichtband nach Figur 4 im zum Einbau konfigurierten, zusammengeklappten Zustand,
- Figur 6:: ein Dichtband nach Figur 5 in Einbausituation.

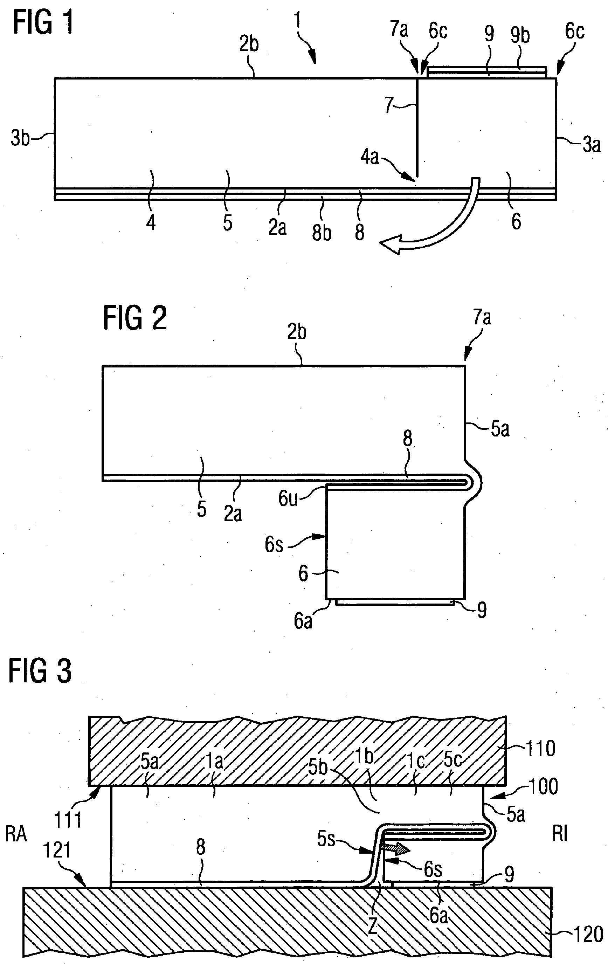

Das Schaumstoff-Dichtband einer ersten Ausführungsform nach den Figuren 1-3 dient einer Abdichtung einer Fuge 100 zwischen gegenüberliegenden Bauteilen 110, 120 (Figur 3), beispielsweise zwischen einem Rahmenbauteil und einem Mauerwerk. Das Dichtband ist in den Figuren 1-3 nur schematisch, nicht maßstabgetreu, dargestellt.

Das Dichtband 1, in Fig. 1 im Ausgangszustand dargestellt, weist zwei gegenüberliegende Breitseiten 2a, 2b und diese miteinander verbindende Schmalseiten 3a, 3b auf, wobei das Dichtband 1 einen Schaumstoffkorpus 4 aufweist. Der Ausgangszustand bezieht sich - wie allgemein im Rahmen der Erfindung - auf den außerhalb der Fuge völlig frei dekomprimierten Zustand des Dichtbandes vor dessen zusammenklappen. Die beiden Breitseiten 2a, 2b des Dichtbandes, welche hier zugleich Breitseiten des Korpus 4 darstellen (was entsprechend auch für die Schmalseiten 3a, 3b gilt), ist in einen Längsabschnitt 5 und einen schmalseitig an diesen angrenzenden Umklappbereich 6 strukturiert. Der Umklappbereich 6 ist durch einen Einschnitt 7 von dem Längsabschnitt 5 separiert. Der Einschnitt 7 erstreckt sich hier nur über einen Teil der Höhe des Korpus 4, so dass der Längsabschnitt 5 und der Umklappbereich 6 durch einen Verbindungsbereich 4a einstückig miteinander verbunden sind. Gegebenenfalls kann nach einer Abwandlung der Einschnitt 7 sich auch über die gesamte Höhe des Korpus 4 erstrecken, so dass Längsabschnitt 5 und Umklappbereich 6 als separate Bauteile bzw. Schaumstoffstreifen ausgebildet sind, welche durch ein Verbindungselement, beispielsweise durch ein an der Breitseite 2a angeordnetes Flächengebilde wie einer Folie, Textillage, Selbstklebeschicht oder dergleichen miteinander verbunden sind. Das Verbindungselement ist auch hier zumindest im Verbindungsbereich 4a deformierbar ausgebildet, unter Ermöglichung einer Umklappung des Umklappbereichs 6 auf den Längsabschnitt 5, so dass diese flächig miteinander zur Anlage kommen, vorzugsweise unter vollflächiger Anlage des Umklappbereich 6 auf dem Längsabschnitt 5.

An der ersten Dichtbandbreitseite 2a ist eine Selbstklebeschicht 8 - welche ggf. auch allgemein als Klebeschicht ausgebildet sein kann - als Befestigungsmittel vorgesehen, mittels derer das Dichtband 1 an einer der beiden gegenüberliegenden Anlageflächen 111, 121 der die Fuge ausbildenden Bauteile 110, 120 festlegbar ist. Sind die beiden Bauteile 110, 120 unterschiedlich ausgebildet, beispielsweise eines der beiden Bauteile leichter beweglich als das andere wie beispielsweise in der Kombination Rahmen- oder Kastenbaüteil und Tragwand bzw. Gebäudewand, so wird die Selbstklebeschicht 8 an dem leichter beweglichen Bauteil festgelegt. Dies kann allgemein im Rahmen der Erfindung gelten. Alternativ oder zusätzlich kann die Selbstklebeschicht eine der ersten Dichtbandbreitseite 2a auch an dem Bauteil festgelegt werden, welches die ebenere bzw. gleichmäßigere oder weniger strukturierte Anlagefläche bereitstellt, beispielsweise einem Rahmenprofil oder (Rollladen)Kasten. Das Dichtband kann allgemein im Rahmen der Erfindung an einem der beiden Bauteile vormontiert und zusammen mit diesem an das andere Bauteil an- oder eingefügt werden oder das Dichtband wird in die bestehende Fuge zwischen den beiden zueinander bereits positionierten Bauteilen eingesetzt. Der Einschnitt 7, welcher den Längsabschnitt 5 und dem Umklappbereich 6 bis gegebenenfalls auf den Verbindungsbereich 4a voneinander separiert, ist hier auf der der (Selbst)Klebeschicht 8 bzw. Breitseite 2a gegenüberliegenden Seite des Korpus 4 angeordnet, so dass also die Einschnitteinmündung 7a in der Breitseite 2b angeordnet ist. Die Selbstklebeschicht 8 erstreckt sich hierbei an der Breitseite 2a zumindest bis etwa zu dem Einschnitt 7 bzw. in Richtung auf die gegenüberliegende Schmalseite 3b hin, um den umgeklappten Umklappbereich 6 (Umklappung in Pfeilrichtung, Fig. 2) an dem Längsabschnitt anhaftend festlegen zu können. Nach dem Ausführungsbeispiel erstreckt sich die (Selbst)Klebeschicht 8 über den mit dem Einschnitt 7 versehenen Dichtbandbereich hinaus in Richtung auf die benachbarte Schmalseite 3a, im Speziellen über im Wesentlichen oder über die gesamte Breitseite 2a des Dichtbandes 1. Hierdurch wird der auf den Längsabschnitt 5 umgeklappte Umklappbereich 6 durch eine Anhaftung der (Selbst)Klebeschicht auf sich selbst an dem Längsabschnitt 5 festgelegt, wodurch sich in der Regel eine erhöhte Haftkraft (Haftung Klebeschicht-Klebeschicht) und sichere Festlegung ergibt. Die Klebeschicht an dem Korpus kann demgegenüber fabrikseitig an dem Korpus festgelegt sein, was sehr zuverlässig ausführbar ist. Vorzugsweise erstrecken sich also mindestens eine oder hier beide Klebelagen, welche den Umklappbereich 6 an dem Längsabschnitt 5 festlegen, über die gesamte Breite des Umklappbereichs und auch über dessen gesamte Anlagefläche an dem Längsabschnitt.

Weiterhin ist an dem Umklappbereich 6 auf der der ersten Breitseite 2a gegenüber liegenden zweiten Breitseite 2b eine weitere (Selbst)Klebeschicht 9 vorgesehen. Im zusammengeklappten Zustand des Dichtbandes 1, d.h. mit auf dem Längsabschnitt 5 umgeklappten und vorzugsweise flächig an oder vollflächig an diesem anliegenden Umklappbereich 6, ist somit die Selbstklebeschicht 9 freiliegend an der Breitseite des Dichtbandes angeordnet, an welcher auch die Selbstklebeschicht 8 angeordnet ist. Die (Selbst)Klebeschicht 9 an der zweiten Breitseite 2b des Korpus erstreckt sich hier nur über die Breite des Umklappbereichs 6 (bzw. nur einen Teil desselben), hier beidseitig beabstandet von den beiden Längsrändern 6c des Umklappbereichs 6. Hierdurch ist sichergestellt, dass bei Einbringung des Einschnittes in dem Korpus und/oder Separierung der einzelnen Dichtungsbänder von der Bahn des Vorformlings, die Klebeschicht 9 nicht durchschnitten werden muss, was die Herstellung vereinfacht und aufgrund der vergleichsweise geringen Breite der Klebeschicht 9 unerwünschte Lageveränderungen oder Beeinträchtigungen derselben bei der Einbringung der Ein- bzw. Trennschnitte vermeidet. Die Klebeschichten 8, 9 des Dichtbandes sind - wie allgemein im Rahmen der Erfindung bevorzugt - hier als Selbstklebeschichten ausgebildet, welche durch eine abziehbare Abdecklage 8b, 9b beispielsweise aus antihaftbeschichtetem Papier usw. abgedeckt sind.

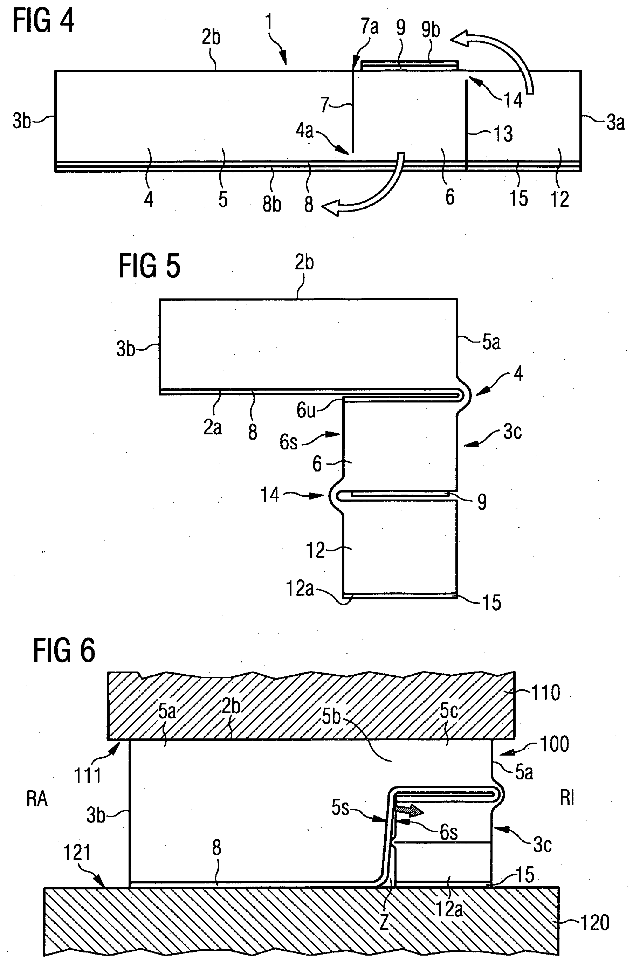

Figur 2 zeigt das Dichtband in zusammengeklapptem Zustand, konfiguriert für den Einbau in die jeweilige Fuge. Die Figuren 1 und 2 (entsprechend auch die Figuren 4 und 5 der zweiten Ausführungsform) zeigen schematisch das Dichtband in vollständig frei expandiertem Zustand, in der Praxis liegt das Dichtband im baustellenseitigen Anlieferungszustand zumeist stark komprimiert vor, so dass die Dichtbandhöhe auch mit umgeklapptem Umklappbereich 6 eine geringere Höhe aufweist, als die jeweilige Fugenbreite. Beispielsweise kann hierbei das in der Fuge vollständig expandierte Dichtband (einlagiger Bereich desselben) eine Höhe von ca. 20-50 %, beispielsweise ca. 30 % dessen vollständig frei entspannten Höhe aufweisen, bezogen auf die Höhe des Dichtbandes im Ausgangszustand gemäß Figur 1 bzw. in Bezug auf die Höhe des Längsabschnittes, welcher nicht von dem Umklappbereich 6 überdeckt wird. Im Anlieferungszustand wie z.B. auf einer Rolle komprimiert kann das Dichtband z.B. eine Höhe von ca. 15-20% des völlig dekomprimierten Ausgangszustandes aufweisen. In der Regel erfolgt das Umklappen bei im Anlieferungszustand vorliegendem Dichtband, also vor oder im Beginn dessen Rückstellung.

Das erfindungsgemäße Dichtband ist insbesondere dadurch herstellbar oder im Rahmen der Erfindung hergestellt, dass eine Schaumstoffbahn beim.Komprimiervorgang-mit einer vielfachen Breite des Dichtbandes vollflächig mit einer (Selbst)Klebeschicht versehen wird, welche ansonsten zumindest ebenfalls eine mehrfache Dichtbandbreite aufweist. Die mit der Klebeschicht versehene Großrolle kann dann in Kleinrollen in Anwendungsbreite zerschnitten werden, unter Ausbildung der Dichtungsbänder. Vorzugsweise wird vor dieser Trennung der Schaumstoffbahn in einzelne Dichtungsbänder die Schaumstoffbahn zunächst mit einem Einschnitt und einer Selbstklebelage an dem vorzusehenden Umklappbereich ausgestattet, wobei vorzugsweise die (Selbst)Klebeschicht an dem Umklappbereich 6 vor Einbringung des Einschnittes in das Schaumstoffmaterial der Bahn aufgebracht wird. Dies gilt jeweils auch für Abwandlungen des Dichtungsbandes, bspw. auch für andere Ausführungsformen wie mit doppeltem Umklappbereich wie die nach den Figuren 4-6, entsprechend. Der Einschnitt wird vorteilhaft vor dem Aufbringen der (Selbst)Klebeschicht vorgenommen, um ein Anhaften von Klebemittel an dem Einschneidewerkzeug wie Messer zu vermeiden.

In Einbaulage des Dichtbandes 1 (siehe Figur 3) erfolgt eine Anhaftung bzw. Festlegung des Dichtbandes an der Anlagefläche 121 des jeweiligen Bauteils sowohl durch die Selbstklebeschicht 8 als auch die Selbstklebeschicht 9, so dass das Dichtband praktisch über dessen gesamte Umklapp-Breitseite mit einer (Selbst)Klebeschicht versehen ist. Diese mit Klebemittel (bzw. befestigungsmittel) ausgerüstete Breitseite ist also diejenige, welche aufgrund der Umklappung im frei expandierten Zustand eine Höhenprofilierung aufweist (siehe Fig. 2) bzw. in Einbaulage in der Fuge einen "Zwickel" oder Durchtrennung der breitseitigen Materiallage. An der gegenüberliegenden Breitseite 2b liegt das Dichtband mit einer durchgehenden, ggf. klebemittelfreien, Anlagefläche an der jeweiligen Anlagefläche des benachbarten Bauteils an. Durch die Umklappung des Umklappbereichs 6 wird somit eine Dichtbandzone mit erhöhter Materialdichte und damit auch erhöhtem Wasserdampfdiffusionswiderstand bereitgestellt, gegenüber dem angrenzenden einlagigen Dichtbandbereich. Die Zone erhöhter Materialdichte ist üblicherweise der Rauminnenseite RI und der Dichtbandbereich mit der gegenüberliegenden Schmalseite 3b der Raumaußenseite RA zugewandt. In besonderen Anwendungsfällen, wie beispielsweise bei zwangsbelüfteten Gebäuden, kann auch eine umgekehrte Einbausituation vorliegen, also mit raumaußenseitig orientierter Schmalseite 3a, was allgemein im Rahmen der Erfindung gelten kann, auch für die anderen Ausführungsformen.

Befindet sich somit das Dichtband 1 in der Fuge 100 derart entspannt, dass beide Dichtbandbreitseiten 2a, 2b an den beiden Fugenwandungen bzw. Bauteilanlageflächen 111, 121 anliegen, vorzugsweise im Gleichgewichtszustand der Dichtbandentspannung, so ist der nicht von dem Umklappbereich 6 überdeckte Bereich des Längsabschnittes 5 vollständig über die Tiefe der Fuge entspannt, unter Ausbildung eines Bereiches 1a geringerer Materialdichte. In dem Bereich 1c, in welchem der umgeklappte Umklappbereich 6 angeordnet ist, liegt ein Bereich erhöhter Materialdichte vor. Der von dem Umklappbereich 6 überdeckte Bereich 5c des Längsabschnittes 5 weist somit eine geringere Höhe auf, als der überdeckungsfreie Bereich 5a des Längsabschnittes 5, der Bereich 5a weist eine stärkere Rückstellung als der Bereich 5c auf. Die beiden Bereiche 5a, 5c des Längsabschnittes 5 sind hierbei durch einen gewissen Übergangsbereich 5b des Längsabschnittes 5 verbunden, bei welchem sich die Rückstellung bzw. die Kompression über den Breitenverlauf ändert, in der Regel kontinuierlich ändert. Auf Höhe des Übergangsbereichs 5b, unmittelbar benachbart dem im mittleren Bereich des Dichtbandes 1 angeordneten Endbereich 6s des Umklappbereichs 6, wird in der Regel das Dichtband 1 nicht vollständig an der Anlagefläche 121 des jeweiligen Bauteils 120 anliegen, sondern ein gewisser Zwickel Z bzw. Freiraum verbleiben. Auch wenn der Zwickel im Einzelfall kaum oder nicht mehr wahrnehmbar sein sollte, aufgrund.Rückstellung und Ausgleich des Korpusmaterials, so ergeben sich dort Korpusbereiche mit unterschiedlicher Rückstellung und unterschiedlicher Materialdichte, ausgehend von einem homogenen Korpus im vollständig frei rückgestelltem Ausgangszustand als Bezugspunkt (sollte der Korpus im Ausgangszustand Bereiche unterschiedliche Materialdichte aufweisen, so ergeben sich in Einbaulage entsprechende Änderungen der Rückstellung bzw. Materialdichte, wie beschrieben). So versteht es sich, dass es in Einbaulage zu einem Ausgleich der Verformungen unterschiedlicher Dichtbandbereiche kommen kann, mit entsprechenden Verformungen oder Materialverschiebungen auch in den Randzonen 5s und 6s des Umklappbereiches bzw. Bereiches erhöhter Materialdichte. Auch der Umklappbereich behält somit, abgesehen von der Kompression aufgrund der gegebenen Fugenbreite, seine Ausgangsgestalt im zusammengeklappten Zustand (entsprechend Figur 2) nicht bei, sondern wird sich aufgrund der Materialspannungen in den Übergangsbereichen kontinuierlich deformieren mit sich ergebender kontinuierlicher Materialdichteänderung, z.B. im Bereich der innen liegenden Stirnseite 6s des Umklappbereichs oder dem zum Korpus hinweisenden Eckbereich 6u, bzw. unter Abrundung desselben. Hierdurch wird somit auf den Bereich erhöhter Materialdichte des Dichtbandes, also auch auf den Umklappbereich 6, aufgrund der kontinuierlich zunehmenden Rückstellung des Dichtbandes eine gewisse lateraler Schubkraft bzw. ein gewisses Verkippmoment ausgeübt (Pfeilrichtung) in Richtung auf die dem Einschnitt 7 benachbarte Schmalseite 5a des Längsabschnittes 5 bzw. in Richtung auf die Fugenöffnung. Hierdurch besteht die Gefahr einer unsachgemäßen Anordnung des Dichtbandes in der Fuge, beispielsweise mit der Tendenz, dass ein Teilbereich des Umklappbereichs 6 in Richtung auf die Fugenöffnung vom Dichtband vorstehen oder gegebenenfalls auch aus der Fugenöffnung austreten kann, insbesondere wenn die Fugenbreite an der Grenze des Verwendungsbereichs des jeweiligen Dichtbandes für eine gegebene Korpushöhe liegt. Dem wird erfindungsgemäß jedoch durch die an der in Einbaulage freien Oberseite 6a des Umklappbereichs 6 vorgesehene (Selbst)Klebeschicht 9, welche an der Bauteilanlagefläche 121 festgelegt ist, entgegengewirkt. Hierdurch ist eine sichere und ordnungsgemäße Dichtbandmontage erleichtert.

Die Figuren 4-6 zeigen eine Abwandlung des Dichtbandes nach den Figuren 1-3. Auf die Ausführungen zu dem ersten Ausführungsbeispiel sei vollinhaltlich verwiesen, gleiche Merkmale sind mit gleichen Bezugsziffern versehen.

Gemäß der Abwandlung ist ein zweiter Umklappbereich 12 vorgesehen, welcher sich an den ersten Umklappbereich 6 gemäß dem ersten Ausführungsbeispiel seitlich anschließt. Der weitere Einschnitt 13 ist an der dem Einschnitt 6 gegenüberliegenden Breitseite 2a angeordnet, mündet also in dieser aus. Das Dichtband ist hier einstückig ausgebildet, mit einem die beiden Umklappbereiche einstückig verbindenden Verbindungsbereich 14, also mit einstückig durchgehendem Schaumstoffmaterial. Gegebenenfalls können auch hier einer oder beide Umklappbereiche 6, 12 als separate Streifen ausgebildet sein, welche durch ein deformierbares und eine Umklappung ermöglichendes Verbindungselement wie ein flexibles Flächengebilde aneinander befestigt sind. Sind bspw. Die Umklappbereiche 6, 12 als separate Streifen ausgebildet, so kann das Flächengebilde hier an der Breitseite 2b angeordnet sein und sich gegebenenfalls zwischen Einschnitt 7 und Schmalseite 3a erstrecken, den Einschnitt 13 überbrückend. Das Flächengebilde kann gegebenenfalls zugleich an seiner freien, dem Dichtbandkorpus abgewandten Oberseite eine (Selbst)-Klebeschicht aufweisen, um in zusammengeklapptem Zustand des Dichtbandes (Figur 5) eine Anhaftung der beiden Umklappbereiche 6, 12 aneinander auszubilden.

Durch die an gegenüberliegenden Breitseiten ausmündenden Einschnitte 7, 13 können die beiden Umklappbereiche 6, 12 gegensinnig zueinander umgeklappt werden (Pfeilrichtung), unter flächiger bzw. vollflächiger Anlage aneinander bzw. an dem Längsabschnitt. Im Bereich der Schmalseite 3c des zusammengeklappten Dichtbandes ist somit eine noch weiter erhöhte Materialdichte vorgesehen, gegenüber dem ersten Ausführungsbeispiel. Auch hier ist an der freien Oberseite 12a des Umklappbereichs 12, welcher in Einbaulage des Dichtbandes an der Fugenwandung anliegt, eine Selbstklebeschicht 15 vorgesehen. Diese (Selbst)Klebeschicht 15 ist vorzugsweise als separate Klebeschicht an dem Korpus 4 abgebracht, gegebenenfalls kann diese als Teil von der (Selbst)Klebeschicht 8 abgetrennt sein, durch Einbringung des Einschnittes 13 in den Korpus und damit Durchtrennung der Klebeschicht 8 (und deren Abdecklage). Auch diese Klebeschicht 15 an der freien Oberseite 12a des Umklappbereichs wirkt hier einer lateralen Verschiebung bzw. Verkippung des Umklappbereichs in Richtung auf die Fugenöffnung entgegen, wenn diese bei Anordnung des Dichtbandes in der Fuge an der Anlagefläche des jeweiligen Bauteils bzw. der Fugenwandung anhaftet (Fig. 6). Dieser unerwünschten Lageveränderung des Umklappbereichs, welche insbesondere dadurch ermöglicht wird, dass bei montiertem Dichtband der Umklappbereich mit dem stärker zurückgestellten Bereich des Längsabschnittes über einen Teil der Fugenhöhe nicht lateral verbunden ist, wird somit zielgerichtet entgegengewirkt. Auch bei diesem Ausführungsbeispiel resultiert ein Dichtbandbereich 5a geringer Materialdichte und starker Rückstellung, ein Dichtbandbereich 5c hoher Materialdichte und geringer Rückstellung, nämlich im Umklappbereich, und ein Übergangsbereich 5b, nämlich im Bereich des Zwickels Z bzw. auf Höhe der lateralen Trennung von Umklappbereich und einlagigem Korpus (bzw. allgemein dem Korpusbereich mit geringerer Lagenerhöhung durch reduzierte oder fehlende Umklappung).

Der Einschnitt 7 bzw. die Einschnitte 7, 13 erstrecken sich hierbei jeweils über ca. 90 % der Korpushöhe, ohne hierauf beschränkt zu sein. Der Korpus weist nach den Ausführungsbeispielen einen rechteckigen Querschnitt auf, er kann jedoch auch anders ausgebildet sein, beispielsweise keilförmig oder mit Bereichen unterschiedlicher Höhe oder dergleichen, bezogen auf das Dichtband im Ausgangszustand.

Die Ausführungsbeispiele sind hier in Bezug auf eine Selbstklebeschicht beschrieben, es kann jeweils auch eine andere Klebeschicht oder ggf. auch ein anderes geeignetes Befestigungsmittel vorgesehen sein.

## Patentansprüche

1. Schaumstoff-Dichtband für eine Abdichtung einer Fuge (100) zwischen gegenüberliegenden Bauteilen (110,120), wobei das Dichtband (1) zwei gegenüberliegende Breitseiten (2a, 2b) aufweist, welche an zwei gegenüberliegende Anlageflächen (111,121) der beiden Bauteile (110, 120) unter Abdichtung der Fuge (100) anlegbar sind, und mit zwei die Breitseiten verbindenden Schmalseiten (3a, 3b), wobei das Dichtband einen vorzugsweise zur verzögerten Rückstellung ausgerüsteten Schaumstoffkorpus (4) aufweist, wobei der Korpus einen Längsabschnitt (5) und einen sich in Breitenrichtung des Dichtbandes anschließenden, mit diesem zusammenhängenden und durch einen Einschnitt (7) über zumindest einen Teil der Dichtbandhöhe separierten Umklappbereich (6) aufweist, und mit einem an einer ersten Dichtbandbreitseite angeordneten Befestigungsmittel (8) bevorzugt in Form einer Klebeschicht zur Festlegung des Dichtbandes an einer Anlagefläche der die Fuge ausbildenden Bauteile versehen ist, wobei der Längsabschnitt (5) eine größere Breite als der Umklappbereich (6) aufweist, **dadurch gekennzeichnet, dass** der an den Dichtbandlängsabschnitt (5) angrenzende Einschnitt (7) auf der dem Befestigungsmittel (8) gegenüberliegenden Seite des Korpus (4) angebracht ist, dass das an der ersten Breitseite (2a) des Längsabschnittes (5) angeordnete Befestigungsmittel (8) sich zumindest derart weit bis zum Einschnitt (7) erstreckt, dass dieses den auf den Längsabschnitt (5) umgeklappten Umklappbereich (6) an dem Längsabschnitt festlegt und dass an dem Umklappbereich (6) auf der der ersten Breitseite gegenüberliegenden zweiten Breitseite ein weiteres Befestigungsmittel (9) zur Festlegung desselben an der Anlagefläche (121) des in Einbaulage zugewandten Bauteils (120) vorgesehen ist.

2. Dichtband nach Anspruch 1, **dadurch gekennzeichnet, dass** sich das Befestigungsmittel (8) der ersten Breitseite (2a) bis nahe zum Einschnitt (7) hin erstreckt.

3. Schaumstoff-Dichtband für eine Abdichtung einer Fuge (100) zwischen gegenüberliegenden Bauteilen (110,120), wobei das Dichtband (1) zwei gegenüberliegende Breitseiten (2a, 2b) aufweist, welche an zwei gegenüberliegende Anlageflächen (111,121) der beiden Bauteile (110, 120) unter Abdichtung der Fuge (100) anlegbar sind, und mit zwei die Breitseiten verbindenden Schmalseiten (3a, 3b), wobei das Dichtband einen vorzugsweise zur verzögerten Rückstellung ausgerüsteten Schaumstoffkorpus (4) aufweist, wobei der Korpus einen Längsabschnitt (5) und einen ersten und einen zweiten sich in Breitenrichtung des Dichtbandes anschließende, mit dem Längsabschnitt (5) zusammenhängenden und jeweils durch einen Einschnitt (7,13) über zumindest einen Teil der Dichtbandhöhe separierten Umklappbereich (6,12) aufweist, und mit zwei an gegenüberliegenden Korpusbreitseiten anordneten Einschnitten, unter Ausbildung der beiden Umklappbereiche, welche gegensinnig zueinander umklappbar sind, und ferner mit einem an einer ersten Dichtbandbreitseite angeordneten Befestigungsmittel (8) bevorzugt in Form einer Klebeschicht zur Festlegung des Dichtbandes an einer Anlagefläche der die Fuge ausbildenden Bauteile versehen ist, wobei der Längsabschnitt (5) eine größere Breite als die Umklappbereiche (6,12) aufweist, **dadurch gekennzeichnet, dass** der an den Dichtbandlängsabschnitt (5) angrenzende Einschnitt (7) auf der dem Befestigungsmittel (8) gegenüberliegenden Seite des Korpus (4) angebracht ist, dass das an der ersten Breitseite (2a) des Längsabschnittes (5) angeordnete Befestigungsmittel (8) sich zumindest derart weit bis zum Einschnitt (7) erstreckt, dass dieses den auf den Längsabschnitt (5) umgeklappten ersten Umklappbereich (6) an dem Längsabschnitt festlegt, dass an dem ersten Umklappbereiche (6) auf der der ersten Breitseite gegenüberliegenden zweiten Breitseite und/oder an der zweiten Korpusbreitseite ein weiteres Befestigungsmittel (9) zur Festlegung des umgeklappten ersten Umklappbereichs (6) vorgesehen ist, und dass an dem zweiten Umklappbereich (12) auf der ersten Korpusbreitseite (2a) ein Befestigungsmittel (15) zur Festlegung desselben an der Anlagefläche (121) des in Einbaulage zugewandten Bauteils (120) vorgesehen ist.

4. Dichtband nach Anspruch 3, **dadurch gekennzeichnet, dass** an dem ersten Umklappbereich (6), welcher benachbart dem Dichtbandlängsabschnitt (5) angeordnet ist, ein Befestigungsmittel (9) an der zweiten Breitseite (2b) angeordnet ist und sich in der Breite nur über den ersten Umklappbereich (6) erstreckt.

5. Dichtband nach einem der Ansprüche 1-4, **dadurch gekennzeichnet, dass** das Befestigungsmittel (8) der ersten Breitseite (2a) sich zumindest annähernd über die gesamte Breitseite (2a) des Dichtbandes (1) erstreckt.

6. Dichtband nach einem der Ansprüche 1-5, **dadurch gekennzeichnet, dass** das weitere Befestigungsmittel (9) an der zweiten Breitseite (2b) des Korpus (4) sich nur über einen Teil der Breite des Umklappbereichs (6) erstreckt.

7. Dichtband nach einem der Ansprüche 1-6, **dadurch gekennzeichnet, dass** an der zweiten Breitseite (2b) des Dichtbandkorpus (4) das weitere Befestigungsmittel (9) nur an dem Umklappbereich angeordnet ist.

8. Dichtband nach einem der Ansprüche 1-7, **dadurch gekennzeichnet, dass** das erste und/oder das weitere Befestigungsmittel (8,9) eine Klebeschicht ist.

9. Dichtband nach Anspruch 8, **dadurch gekennzeichnet, dass** das als Klebeschicht ausgebildete erste und/oder weitere Befestigungsmittel (8,9) eine Selbstklebeschicht ist.

10. Dichtband nach einem der Ansprüche 8 oder 9, **dadurch gekennzeichnet, dass** die Klebeschicht jeweils mit einer abziehbaren Abdecklage (8b,9b) versehen ist, und dass die jeweilige Klebeschicht und die an dieser aufgebrachte Abdecklage (8b,9b) nicht von einem Einschnitt durchsetzt sind.

11. Dichtband nach einem der Ansprüche 1-10, **dadurch gekennzeichnet, dass** der Längsabschnitt (5) und zumindest der benachbarte oder sämtliche Umklappbereiche (6,12) einstückig unter Ausbildung eines durchgehenden Schaumstoffkorpus (4) zusammenhängen.

12. Dichtband nach einem der Ansprüche 1-10, **dadurch gekennzeichnet, dass** der Längsabschnitt (5) und der benachbarte oder sämtliche Umklappbereiche (6,12) als separate Streifen ausgebildet sind, welche jeweils durch einen sich über die Streifenhöhe erstreckenden Einschnitt voneinander getrennt sind und an einer Breitseite des Dichtbandes miteinander verbunden sind.

13. Bauwerk mit zumindest zwei zwischen sich eine Fuge (100) ausbildenden Bauteilen (110,120), mit in der Fuge (100) beidseitig abdichtend angeordnetem Dichtband (1) nach einem der Ansprüche 1-12.

## Claims

1. Foam sealing strip for sealing a joint (100) between components (110, 120) located opposite one another, wherein the sealing strip (1) has two opposite broadsides (2a, 2b) which can be placed against two opposite bearing faces (111, 121) of the two components (110, 120) to seal the joint (100), and having two narrow sides (3a, 3b) connecting the broadsides, wherein the sealing strip has a foam body (4) which is preferably designed for a delayed return to shape, wherein the body has a longitudinal section (5) and a foldable region (6) which adjoins the latter in the width direction of the sealing strip, is contiguous therewith and is separated by an incision (7) over at least part of the height of the sealing strip, said body having a fastening means (8), arranged on a first sealing strip broadside and preferably in the form of an adhesive layer, for fixing the sealing strip to a bearing face of the components forming the joint, wherein the longitudinal section (5) has a greater width than the foldable region (6), **characterized in that** the incision (7) adjoining the sealing strip longitudinal section (5) is made on the side of the body (4) opposite the fastening means (8), **in that** the fastening means (8) arranged on the first broadside (2a) of the longitudinal section (5) extends to the incision (7) at least far enough that it fastens to the longitudinal section the foldable region (6) folded over onto the longitudinal section (5), and **in that** there is provided on the foldable region (6), on the second broadside located opposite the first broadside, a further fastening means (9) for fixing said foldable region to the bearing face (121) of the opposite component (120) in the installed position.

2. Sealing strip according to claim 1, **characterized in that** the fastening means (8) of the first broadside (2a) extends into the vicinity of the incision (7).

3. Foam sealing strip for sealing a joint (100) between components (110, 120) located opposite one another, wherein the sealing strip (1) has two opposite broadsides (2a, 2b) which can be placed against two opposite bearing faces (111, 121) of the two components (110, 120) by sealing the joint (100), and having two narrow sides (3a, 3b) connecting the broadsides, wherein the sealing strip has a foam body (4) which is preferably designed for a delayed return to shape, wherein the body has a longitudinal section (5) and a first and second foldable region (6, 12) which adjoin one another in the width direction of the sealing strip, are contiguous with the longitudinal section (5) and are each separated by an incision (7, 13) over at least part of the height of the sealing strip, said body having two incisions arranged on opposite body broadsides by forming the two foldable regions which can be folded over in opposite directions to one another, and furthermore having a fastening means (8), arranged on a first sealing strip broadside and preferably in the form of an adhesive layer, for fixing the sealing strip to a bearing face of the components forming the joint, wherein the longitudinal section (5) has a greater width than the foldable regions (6, 12), **characterized in that** the incision (7) adjoining the sealing strip longitudinal section (5) is arranged on the side of the body (4) opposite the fastening means (8), **in that** the fastening means (8) arranged on the first broadside (2a) of the longitudinal section (5) extends to the incision (7) at least far enough that it fastens to the longitudinal section the first foldable region (6) folded over onto the longitudinal section (5), **in that** there is provided on the first foldable region (6), on the second broadside opposite the first broadside and/or on the second body broadside, a further fastening means (9) for fixing the folded-over first foldable region (6), and **in that** there is provided on the second foldable region (12), on the first body broadside (2a), a fastening means (15) for fixing said second foldable region to the bearing face (121) of the opposite component (120) in the installed position.

4. Sealing strip according to claim 3, **characterized in that**, on the first foldable region (6) which is arranged adjacent to the sealing strip longitudinal section (5), a fastening means (9) is arranged on the second broadside (2b) and extends in the width only over the first foldable region (6).

5. Sealing strip according to any one of claims 1 to 4, **characterized in that** the fastening means (8) of the first broadside (2a) extends at least approximately over the entire broadside (2a) of the sealing strip (1).

6. Sealing strip according to any one of claims 1 to 5, **characterized in that** the further fastening means (9) on the second broadside (2b) of the body (4) extends only over part of the width of the foldable region (6).

7. Sealing strip according to any one of claims 1 to 6, **characterized in that**, on the second broadside (2b) of the sealing strip body (4), the further fastening means (9) is arranged only on the foldable region.

8. Sealing strip according to any one of claims 1 to 7, **characterized in that** the first and/or the further fastening means (8, 9) is an adhesive layer.

9. Sealing strip according to claim 8, **characterized in that** the first and/or further fastening means (8, 9) designed as an adhesive layer is a self-adhesive layer.

10. Sealing strip according to any one of claims 8 or 9, **characterized in that** the adhesive layer is provided in each case with a peelable cover layer (8b, 9b), and **in that** the respective adhesive layer and the cover layer (8b, 9b) applied thereto are not penetrated by an incision.

11. Sealing strip according to any one of claims 1 to 10, **characterized in that** the longitudinal section (5) and at least the adjacent or all foldable regions (6, 12) are contiguous in one piece so as to form a continuous foam body (4).

12. Sealing strip according to any one of claims 1 to 10, **characterized in that** the longitudinal section (5) and the adjacent or all foldable regions (6, 12) are configured as separate strips which are each separated from one another by an incision extending over the height of the strip and are connected to one another on a broadside of the sealing strip.

13. Structure comprising at least two components (110, 120) forming a joint therebetween, with a sealing strip (1) according to any one of claims 1 to 12 arranged in the joint (100) so as to provide a sealing effect on both sides.

## Revendications

1. Bande d'étanchéité en mousse pour l'obturation d'un joint (100) entre des composants (110, 120) opposés, ladite bande d'étanchéité (1) présentant deux bordées (2a, 2b) opposées, pouvant être appliquées contre deux surfaces d'appui (111, 121) opposées des deux composants (110, 120) en étanchéifiant le joint (100), et avec deux chants (3a, 3b) reliant les bordées, ladite bande d'étanchéité ayant un corps en matériau cellulaire (4) préférentiellement équipé de manière à permettre un retard de rappel élastique, ledit corps présentant un segment longitudinal (5) et une partie rabattable (6) adjacente dans le sens du chant de la bande d'étanchéité, raccordée d'un seul tenant à celle-ci et séparée par une entaille (7) sur au moins une partie de la hauteur de la bande d'étanchéité, et étant pourvu d'un moyen de fixation (8) disposé sur une première bordée de bande d'étanchéité, de préférence sous la forme d'une couche de colle pour fixer la bande d'étanchéité sur une surface de butée des composants formant le joint, le segment longitudinal (5) présentant une extension supérieure à la partie rabattable (6), **caractérisée en ce que** l'entaille (7) adjacente au segment longitudinal (5) de la bande d'étanchéité est ménagée sur la face du corps (4) opposée au moyen de fixation (8), **en ce que** le moyen de fixation (8) disposé sur la première bordée (2a) du segment longitudinal (5) s'étend au moins jusqu'à l'entaille (7), de manière à fixer contre le segment longitudinal (5) la partie rabattable (6) rabattue sur celui-ci, et **en ce qu'**un autre moyen de fixation (9) est prévu contre la partie rabattable (6), sur la deuxième bordée opposée à la première bordée, pour fixer celle-ci sur la surface de butée (121) du composant (120) opposé en position de montage.

2. Bande d'étanchéité selon la revendication 1, **caractérisée en ce que** le moyen de fixation (8) de la première bordée (2a) s'étend jusqu'à proximité de l'entaille (7).

3. Bande d'étanchéité en mousse pour l'obturation d'un joint (100) entre des composants (110, 120) opposés, ladite bande d'étanchéité (1) présentant deux bordées (2a, 2b) opposées, pouvant être appliquées contre deux surfaces d'appui (111, 121) opposées des deux composants (110, 120) en étanchéifiant le joint (100), et avec deux chants (3a, 3b) reliant les bordées, ladite bande d'étanchéité ayant un corps en matériau cellulaire (4) préférentiellement équipé de manière à permettre un retard de rappel élastique, ledit corps présentant un segment longitudinal (5) et une première et une deuxième parties rabattables (6, 12) adjacentes dans le sens du chant de la bande d'étanchéité, raccordées d'un seul tenant au segment longitudinal (5) et séparées chacune par une entaille (7, 13) sur au moins une partie de la hauteur de la bande d'étanchéité, avec deux entailles ménagées sur deux bordées de corps opposées, générant les deux parties rabattables en sens contraire l'une contre l'autre, et étant en outre pourvu d'un moyen de fixation (8) disposé sur une première bordée de bande d'étanchéité, de préférence sous la forme d'une couche de colle pour fixer la bande d'étanchéité sur une surface de butée des composants formant le joint, le segment longitudinal (5) présentant une extension supérieure à la partie rabattable (6, 12), **caractérisée en ce que** l'entaille (7) adjacente au segment longitudinal (5) de la bande d'étanchéité est ménagée sur la face du corps (4) opposée au moyen de fixation (8), **en ce que** le moyen de fixation (8) disposé sur la première bordée (2a) du segment longitudinal (5) s'étend au moins jusqu'à l'entaille (7), de manière à fixer contre le segment longitudinal (5) la première partie rabattable (6) rabattue sur celui-ci, **en ce qu'**un autre moyen de fixation (9) disposé contre la première partie rabattable (6), sur la deuxième bordée opposée à la première bordée, et/ou contre la deuxième bordée de corps est prévu pour fixer la première partie rabattable (6), et **en ce qu'**un moyen de fixation (15) est prévu contre la deuxième partie rabattable (12) sur la première bordée (2a) de corps pour fixer celle-ci sur la surface de butée (121) du composant (120) opposé en position de montage.

4. Bande d'étanchéité selon la revendication 3, **caractérisée en ce qu'**un moyen de fixation (9) est disposé contre la première partie rabattable (6) contiguë au segment longitudinal (5) de la bande d'étanchéité, sur la deuxième bordée (2b), et ne s'étend en bordée que sur la première partie rabattable (6).

5. Bande d'étanchéité selon l'une des revendications 1 à 4, **caractérisée en ce que** le moyen de fixation (8) de la première bordée (2a) s'étend au moins sensiblement sur toute la bordée (2a) de la bande d'étanchéité (1).

6. Bande d'étanchéité selon l'une des revendications 1 à 5, **caractérisée en ce que** l'autre moyen de fixation (9) contre la deuxième bordée (2b) du corps (4) ne s'étend que sur une partie de la bordée de la partie rabattable (6).

7. Bande d'étanchéité selon l'une des revendications 1 à 6, **caractérisée en ce que** l'autre moyen de fixation (9) sur la deuxième bordée (2b) du corps (4) de bande d'étanchéité n'est disposé que contre la partie rabattable.

8. Bande d'étanchéité selon l'une des revendications 1 à 7, **caractérisée en ce que** le premier et/ou l'autre moyens de fixation (8, 9) sont des couches d'adhésif.

9. Bande d'étanchéité selon la revendication 8, **caractérisée en ce que** le premier et/ou l'autre moyens de fixation (8, 9) réalisés comme des couches d'adhésif sont des couches autocollantes.

10. Bande d'étanchéité selon l'une des revendications 8 ou 9, **caractérisée en ce que** chaque couche d'adhésif est prévue avec une couche de couverture (8b, 9b) amovible, et **en ce que** chaque couche d'adhésif et la couche de couverture (8b, 9b) appliquée sur celle-ci ne sont pas traversées par une entaille.

11. Bande d'étanchéité selon l'une des revendications 1 à 10, **caractérisée en ce que** le segment longitudinal (5) et au moins la partie rabattable contiguë, ou toutes les parties rabattables (6, 12) sont raccordés d'un seul tenant en formant un corps en matériau cellulaire (4) continu.

12. Bande d'étanchéité selon l'une des revendications 1 à 10, **caractérisée en ce que** le segment longitudinal (5) et la partie rabattable contiguë, ou toutes les parties rabattables (6, 12) sont réalisés comme des bandes séparées l'une de l'autre par une entaille correspondante s'étendant sur la hauteur de bande et raccordés l'un à l'autre sur une bordée de la bande d'étanchéité.

13. Construction avec au moins deux composants (110, 120) formant un joint (100) entre eux, avec une bande d'étanchéité (1) selon l'une des revendications 1 à 12 disposée dans le joint (100) et assurant une étanchéité sur les deux côtés.
